Europäisches Patentamt

European Patent Office

Office européen des brevets

(19)

(11) Veröffentlichungsnummer: **0 087 197**
**A1**

(12) # EUROPÄISCHE PATENTANMELDUNG

(21) Anmeldenummer: 83200242.2

(22) Anmeldetag: 17.02.83

(51) Int. Cl.³: **F 04 D 29/04**
**F 04 D 27/02, F 16 C 39/06**

(30) Priorität: 22.02.82 CH 1074/82

(43) Veröffentlichungstag der Anmeldung:
31.08.83 Patentblatt 83/35

(84) Benannte Vertragsstaaten:
CH DE FR GB IT LI SE

(71) Anmelder: BBC Aktiengesellschaft Brown, Boveri &
Cie.
Haselstrasse
CH-5401 Baden(CH)

(72) Erfinder: Schwarz, Martin
Rütisteig 1
CH-5115 Möriken(CH)

(54) Antrieb und Lagerung eines Turboverdichters.

(57) Zur Vermeidung der üblicherweise verlustreichen Drosselregelung von Turbo-Motorverdichtern für beispielsweise Wärmepumpen, Kältemaschinen und Klimaanlagen und der damit verbundenen unerwünschten Netzrückwirkungen sind für die Regelung der Drehzahl des Elektromotors 1 thyristor- oder transistorgesteuerte Zwischenkreisumrichter für eine variable Ausgangsfrequenz- und spannung vorgesehen. Die Welle 11 der Turbo-Motorverdichter ist dabei in Magnetlagern 12, 13, 14 oder gasdynamischen Gleitlagern oder hydrostatischen Gaslagern magnetisch oder gasdynamisch oder hydrostatisch berührungslos gelagert. Dadurch kommt kein Oel von dem überlicherweise verwendeten Wälz- oder Gleitlager mit dem Arbeitsmedium, beispielsweise einem Kältemittel in Berührung und eine dadurch hervorgerufene nachteilige Beeinflussung einmal des Arbeitsmediums und zum anderen der Lagerung der Welle 11 ist mit Sicherheit ausgeschlossen. Zudem entfallen alle für die Oelschmierung der Gleitlager erforderlichen Einrichtungen und Ueberwachungsanlagen und der Wartungsaufwand für die Lager 12, 13, 14 kann wesentlich reduziert werden.

EP 0 087 197 A1

Croydon Printing Company Ltd.

20/82

KT/eh

- 1 -

## Antrieb und Lagerung eines Turboverdichters

Die Erfindung bezieht sich auf einen Turboverdichter mit fliegender Anordnung der Verdichterräder und Direktantrieb durch einen Elektromotor, welcher vom Arbeitsmittel des Verdichters gekühlt ist.

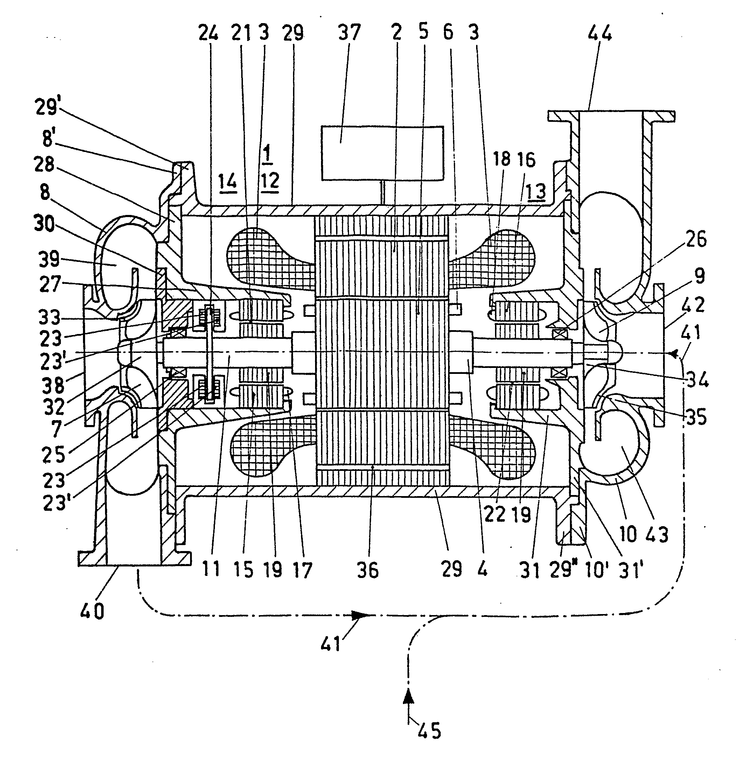

Eine derartige Vorrichtung ist z.B. aus der Veröffentlichung "Lehrbuch der Kältetechnik", S. 325, Bild 4/76, von H.L. v. Cube, Verlag C.F. Müller, Karlsruhe 1981" bekannt.

Die Anforderungen, welche an Turboverdichter für Kältemaschinen, Wärmepumpen oder Klimaanlagen gestellt werden, sind im wesentlichen folgende:

- hohe Leistung pro Maschineneinheit
- grosser Regelbereich
- lange Lebensdauer
- kurze Stillstandszeiten
- grosse Revisionsintervalle
- geringer Montage- bzw. Demontageaufwand
- geringer Platzbedarf

Diesen Forderungen kann aber nur mit Maschinenkonstruktionen nachgekommen werden, die den unterschiedlichen Betriebsverhältnissen der Kältemaschinen, Wärmepumpen oder Klimaanlagen auf flexible Weise angepasst werden können. Ein grosser Regelbereich lässt sich durch variable Drehzahl erreichen. Die notwendige Robustheit der konstruktiven Ausführungen und die notwendige Laufruhe der Rotoren bei unterschiedlichen Drehzahlen, welche die Lagerung der Rotoren betreffen, sind hierfür eine wichtige Voraussetzung.

In der Veröffentlichung "Lehrbuch der Kältetechnik", S. 325, insbesondere Bild 4/76, von H.L. v. Cube, Verlag C.F. Müller, Karlsruhe 1981 wird ein Turboverdichter der obenerwähnten Gattung beschrieben.

Hierbei sind der Rotor des Elektromotors und die beidseitig angeordneten Laufräder der beiden Verdichterstufen gemeinsam auf einer Welle angeordnet und der Elektromotor und die Verdichter bilden dabei eine kompakte Baueinheit. Die Welle wird von zwei Gleitlagern mit axialem Bund getragen. An diese Lager werden bei hochtourigen Verdichtern mit relativ hohen Gleitgeschwindigkeiten beträchtliche Anforderungen hinsichtlich Gleiteigenschaften und Laufruhe bei hohen Drehzahlen gestellt, denen jedoch mit druckölgeschmierten Gleitlagern nur hinreichend nachgekommen werden kann.

Darüber hinaus besteht bei Verwendung von druckölgeschmierten Gleitlagern die Gefahr, dass trotz sorgfältiger Abdichtung Oel in beispielsweise den Kältemittelkreislauf gelangen kann, wodurch dann in den Lagern Oelmangel auftreten kann. Die Entfernung des Oeles aus dem Kältemittelkreislauf erfordert zusätzliche Massnahmen, die sich wiederum verteuernd auswirken. Andererseits kann sich im Kühlmittelkreislauf das Kältemittel mit dem Schmieröl der Lager mischen, wodurch bei einer plötzlichen Druckabsenkung das Oel infolge Schäumung seine Schmierfähigkeit verliert, und die Maschine Schaden leidet. Oelüberwachung und Oelwechsel erfordern überdies einen ständigen Wartungsaufwand.

Für Turboverdichter mit kleinen bis grossen Leistungseinheiten sind Drehzahl-Erhöhungsgetriebe erforderlich, die bei mehrstufigen Verdichtern ausserhalb des Verdichtergehäuses angeordnet sind. Diese Anordnung bedingt einen zusätzlichen baulichen Aufwand. Zudem kann mit einem Getriebe zwar die Drehzahl erhöht, jedoch im Normalfall nicht variabel den jeweils erforderlichen Betriebsverhältnissen der Wärmepumpen, Kältemaschinen oder Klimaanlagen angepasst werden.

Ausgehend vom vorstehend geschilderten Stand der Technik liegt der Erfindung die Aufgabe zugrunde, einen Turbo-Motorverdichter zu schaffen, der einmal in einem hohen- und zum anderen in einem variablen Drehzahlbereich betriebssicher arbeitet und der Oel in den Lagern vermeidet. Zur Lösung dieser Aufgabe ist erfindungsgemäss vorgesehen, dass die Welle des Elektromotors und der Verdichterräder mechanisch berührungslos gelagert ist, und dass der Motor mittels eines thyristor- oder transistorgesteuertes Zwischenkreisumrichters mit variabler Ausgangsfrequenz und -spannung in Leistung und Drehzahl regelbar ist.

Diese konstruktive Ausbildung weist folgende Vorteile auf:

- Das Drehmoment wird elektromagnetisch ohne nennenswerte Verluste auf die rotierende Masse des Rotors und auf die Verdichterwelle übertragen. Durch die geringe Reibung der Lagerung resultiert selbst bei hohen Drehzahlen eine verminderte Leistungsaufnahme des Elektromotors gegenüber Gleit- oder Wälzlagern.

- Dieser obengenannte Vorteil wird noch dadurch verstärkt, dass die Lagerung des Rotors und der Verdichterwelle infolge der Kompaktbauweise von Elektromotor und Verdichter an den Wellen dynamisch bevorzugten und anwendungsspezifisch zweckmässigsten Stellen vorgesehen ist.

- Der statische Teil der Wellenlagerung und die Welle selbst, insbesondere der Wellendurchmesser lassen sich schwingungsmässig derart ausbilden, dass die Welle in einem hohen Drehzahlbereich stabil geführt ist.

- Durch die stetige Regelung der Drehzahl des Elektromotors kann die Verdichterleistung flexibel an den Bedarf der Wärmepumpen, Kältemaschinen oder Klimaanlagen angepasst und dadurch die mittlere Leistungszahl verbessert werden.

  Ein- und Ausschaltung der Turbo-Motorverdichter und damit verbundene grosse Verluste und Rückwirkungen auf das elektrische Netz werden vermieden bzw. auf ein Minimum beschränkt.

Gemäss Anspruch 2 ist die magnetisch berührungslose Lagerung mittels Magnetlager ausgeführt.

Nach Anspruch 3 ist die gasdynamisch berührungslose Lagerung mittels gasdynamischer Gleitlager ausgeführt.

Entsprechend Anspruch 4 ist die hydrostatisch berührungslose Lagerung mittels hydrostatischer Gaslager ausgeführt.

Mit Hilfe der erfindungsgemässen Einrichtungen entsprechend der Ansprüche 2, 3 und 4 kann mit Sicherheit der Wartungsaufwand für die Lager und der in bestimmten Intervallen durchzuführende Oelwechsel vermieden werden. Darüber hin-

- 5 -

0087197

aus können alle für die Druckölschmierung der Gleitlager erforderlichen Einrichtungen und Ueberwachungsanlagen entfallen.

Gemäss Anspruch 5 sind die Magnetlager aus Elektromagneten aufgebaut.

Gemäss Anspruch 6 bestehen die Magnetlager wenigstens teilweise aus Permanentmagneten, wobei die Elektronmagnete im Statorteil der Magnetlager mit regelbarer Magnetkraft versehen sind.

Durch die erfindungsgemässe Anordnung entsprechend den Ansprüchen 5 und 6 wird erreicht, dass die Magnetkraft der Magnetlager für jeden beliebigen Maschinenbetriebszustand exakt eingestellt werden kann.

Entsprechend Anspruch 7 sind die Magnetlager sowohl radiale als auch axiale Magnetlager.

Gemäss Anspruch 8 sind die gasdynamischen Gleitlager sowohl radiale als auch axiale Gleitlager.

Entsprechend Anspruch 9 sind die hydrostatischen Gaslager sowohl radiale als auch axiale Gaslager.

Der Vorteil der Erfindung nach den Ansprüchen 7, 8 und 9 besteht insbesondere darin, dass die Rotorwelle des Elektromotors und die Verdichterwelle in jedem Drehzahlbereich radial und axial stabil geführt und genau positioniert sind.

Nach Anspruch 10 ist die Baueinheit, im wesentlichen bestehend aus Verdichter und Elektromotor druckdicht und mit Flanschen für den Einbau in eine Rohrleitung versehen.

Durch die erfindungsgemässe Anordnung gemäss Anspruch 10 wird erreicht, dass die Baueinheit auf einfache Weise in eine Kältemaschine oder Klimaanlage integriert werden kann.

Die Erfindung wird nachstehend anhand in der Zeichnung dargestellten Ausführungsbeispiels näher erläutert:

Die Zeichnung zeigt einen vertikalen Schnitt durch einen Turbo-Motorverdichter mit zwei Verdichterstufen. Der Turbo-Motorverdichter besteht beispielsweise aus einer Baueinheit von einem Elektromotor 1 mit Statorblechpaket 2, Statorwicklung, von der in der Zeichnung lediglich die Wickelköpfe 3 zu sehen sind und dem Rotorblechpaket 5 mit Rotorkäfigwicklung 6 sowie den Verdichtern mit dem Verdichterrad 7 und dem Spiralgehäuse 8 der ersten Verdichterstufe sowie dem Verdichterrad 9 und dem Spiralgehäuse 10 der zweiten Verdichterstufe. Der Rotor 4 des Elektromotors 1 und die beiden Verdichterräder 7 und 9 sitzen auf einer gemeinsamen Welle 11, welche von einem ersten magnetischen radialen Lager 12 und von einem zweiten magnetischen radialen Lager 13 in radialer Richtung geführt ist. Sowohl das erste magnetische radiale Lager 12, als auch das zweite magnetische radiale Lager 13 bestehen aus den Statorblechpaketen 15, 16, den Statorwicklungen 17, 18 sowie aus den Rotorblechpaketen 19, 20, die fest mit der Welle 11 verbunden sind. Zwischen den Statorblechpaketen 15, 16 und den Rotorblechpaketen 19, 20 bilden sich jeweils die Funktionsflächen 21, 22 der radialen Lager 12, 13 aus. Durch die während des Betriebes des Turbo-Motorverdichters ständig in den Funktionsflächen 21, 22 der radialen Lager 12, 13 erzeugten anziehenden magnetischen Kräfte wird die Welle 11 berührungslos in den Lagern 12, 13 geführt. Im dargestellten Ausführungsbeispiel werden die anziehenden magnetischen Kräfte in den Funktionsflächen 21, 22 der radialen Lager 12, 13 durch Elektromagnete hervorgerufen. Es ist jedoch möglich, die Magnetlager 12, 13 mit Permanentmagneten auszurüsten, welche in Kombination mit Elektromagneten zusammenwirken, wobei im Statorteil der Lager 12, 13 die Magnetkraft der Elektromagnete variabel regelbar ist. Zur axialen Positionierung der Welle 11 ist ein Axiallager 14 vorgesehen, welches aus Statorblechpaketen 23, 23' mit Wicklungen besteht, die beidseitig einer ringförmigen Erweiterung 24 angeordnet sind. Aus Gründen besserer Uebersicht wurden die Wicklungen in der Zeichnung weggelassen. Im dargestellten Ausführungsbeispiel sind für das Axiallager 14 Elektromagnete vorgesehen. Ebenfalls wie bei den Radiallagern 12, 13 können auch hier Permanentmagnete in Kombination mit Elektromagneten zur Anwendung kommen.

Die Wirkungsweise einer berührungslosen Führung der Maschinenwelle 11 durch die radialen magnetischen Lager 12, 13 wird im Normalfall nur während des Betriebes des Turbo-Motorverdichters aufrechterhalten. Für die Ausserbetriebsetzung der Maschinenanlage oder bei Stromausfall sind ein erstes 25 und ein zweites Fanglager 26 vorgesehen, die zur Aufnahme der abgesenkten Maschinenwelle 11 bei Maschinenstillstand dienen. Das erste Radiallager 12 und das Axiallager 14 werden von einem Lagerträger 27 gehalten, der mit seinem Flansch 28 mit dem Flansch 29' des Gehäuses 29 des Elektromotors 1 fest und koaxial zur Maschinenachse verbunden ist. In dem Flansch 28 des Lagerträgers 27 ist eine Ausnehmung für den Lagerträger 30 des ersten Fanglagers 25 vorgesehen, welcher Lagerträger 30 ebenfalls fest und koaxial zur Maschinenachse mit dem Lagerträger 27 verbunden ist.

Das zweite Radiallager 13 und das zweite Fanglager 26 sind vom Lagerträger 31 gehalten, welcher fest und koaxial zur Maschinenachse mit dem Flansch 29" des Gehäuses 29 des Elektromotors 1 verbunden ist. In der Zeichnung ist als Ausführungsbeispiel ein zweistufiger Turbo-Motorverdichter dargestellt, es ist jedoch möglich, dass an den Elektromotor 1 lediglich nur ein Verdichter angeschlossen ist oder es besteht die Möglichkeit, dass beidseitig des Elektromotors 1 je zwei Verdichter angeordnet sind und durch den Elektromotor 1 angetrieben werden.

Ebenso sind auf der Zeichnung nur Magnetlager 12, 13, 14 dargestellt. Es können aber ebenso gut gasdynamische Gleitlager zur radialen und axialen Führung der Welle 11 verwendet werden und auch hydrostatische Gleitlager für kleine Drehzahlen. Bereits bei geringer Drehzahl der Welle 11 findet sowohl in den beiden gasdynamischen Radialgleitlagern und dem gasdynamischen Axiallager ein Druckaufbau statt und es bildet sich selbsttätig ein konvergierender Spalt zwischen den Funktionsflächen der gasdynamischen Lager aus.

Das Spiralgehäuse 8 der ersten Verdichterstufe ist mit seinem Flansch 8' fest mit dem Flansch 29' des Gehäuses 29 des Elektromotors 1 und das Spiralgehäuse 10 der zweiten Verdichterstufe ist ebenfalls fest mit seinem Flansch 10' mit dem Flansch 29" des Gehäuses 29 des Elektromotors 1 verbunden.

Die Verdichterschaufeln 7 der ersten Verdichterstufe sind auf einer Tragscheibe 32 aufgesetzt und gegenseitig durch eine Deckscheibe 33 verbunden. Die Verdichterschaufeln 9 der zweiten Verdichterstufe sind auf einer Tragscheibe 34 aufgesetzt und gegenseitig durch eine Deckscheibe 35 verbunden. Die beiden Verdichter 7, 8, 9, 10 und der Elektromotor 1 sind von druckfesten Gehäusen 8, 10, 29 umgeben, die für den Innendruck der Verdichter 7, 8, 9, 10 dimensioniert sind. Zwischen den Flanschen 8', 10', 29', 29" sind Dichtungen angeordnet, die jedoch aus Gründen besserer Uebersicht auf der Zeichnung nicht veranschaulicht sind.

Im Statorblechpaket 2 des Elektromotors 1 sind andeutungsweise schematisch Kühlkanäle 36 dargestellt, die zur Kühlung des Elektromotors 1 dienen, wobei die Kühlluftventilatoren auf der Zeichnung nicht gezeigt sind. Mit der Bezugsziffer 37 ist der thyristor oder transistorgesteuerte Zwischenkreisumrichter bezeichnet, der zur Drehzahlregelung des Elektromotors 1 bestimmt ist. Die elektrischen Zuführungen zu dem Elektromotor 1 und den magnetischen Radiallagern 12, 13 und dem Axiallager 14 sind durch, in der Zeichnung nicht dargestellte, isolierte Platten gasdicht durch das Gehäuse 29 des Elektromotors 1 geführt, und werden ausserhalb des Gehäuses 29 des Elektromotors 1 mit ebenfalls nicht dargestellten Klemmkästen mit dem Umrichter 37 bzw. netzseitigen elektrischen Anschlüssen verbunden.

Durch den Ansaugstutzen 38 strömt das Arbeitsmedium, beispielsweise ein Fluorkohlenstoff-Gas den Verdichterrädern 7 axial zu. Dann tritt es in einen auf der Zeichnung nicht dargestellten Ringraum und schliesslich in einen als Diffusor wirkenden Spiralraum 39 ein, von wo es in den Austrittsstutzen 40 aus dem ersten Verdichter ausströmt.

Durch einen in der Zeichnung nicht gezeigten Umführungskanal strömt nunmehr das Arbeitsmedium in Richtung des Pfeiles mit der Bezugsziffer 41 von dem Austrittsstutzen 40 des ersten Verdichters zum Eintrittsstutzen 42 des zweiten Verdichters, wird dort weiter verdichtet und verlässt nach dem Durchströmen durch den als Diffusor wirkenden Spiralraum 43 den Austrittsstutzen 44 des zweiten Verdichters. Durch den Pfeil mit der Bezugsziffer 45 wird angedeutet, dass ein Teilstrom des Arbeitsmediums aus einem Ausdampfgefäss in den Verdichterprozess vor der zweiten Verdichterstufe eingeführt wird. Hierdurch kann die Antriebsleistung des Elektromotors 1 gesenkt werden.

Arbeitet der Turbo-Motorverdichter beispielsweise als Wärmepumpe, so ist der Ansaugstutzen 38 des ersten Verdichters mit dem Verdampfer, der in der Zeichnung nicht dargestellt ist, und der Austrittsstutzen 44 des zweiten Verdichters mit dem ebenfalls nicht dargestellten Verflüssiger verbunden.

Die Funktionsweise des erfindungsgemässen Antriebes und der Lagerung von Turbo-Motorverdichtern wird nachstehend näher beschrieben:

Zur Inbetriebsetzung des Turbo-Motorverdichters werden zunächst die Lager 12, 13, 14 erregt. Infolge magnetischer Kräfte, die mittels der Lagerregelung gesteuert werden, hebt sich die Welle 11 aus den Fanglagern 24, 25 um Bruchteile eines Millimeters, bis diese in der gewünschten Lage schwebt, wobei die geometrischen Achsen von Welle 11 und Stator zusammenfallen. Nach Einschalten des Umrichters 37 läuft der Motorverdichter an, wobei die Drehzahl mit zunehmender Speisefrequenz bis zu einem vorgegebenen Wert zunimmt und der Verdichter die gewünschte Arbeitsmittelmenge fördert. Verlangt die Anlagenregelung einen kleineren oder grösseren Arbeitssmittelstrom, dann wird der Umrichter 37 verstellt, und infolge der veränderten Frequenz erhöht oder erniedrigt sich die Drehzahl des Motorverdichters, wodurch der Arbeitsmittelsstrom dem gewünschten Wert angepasst wird. Damit wird die übliche verlustreiche Drosselregelung der Verdichter vermieden. Durch den sanften Lauf mit gelegentlicher Drehzahlanpassung werden die Maschinen geschont, da häufiges Ein- und Ausschalten bei Vollast, das auch zu unerwünschten Netzrückwirkungen führt, entfällt. Es entfallen auch weitere Regelorgane wie Drossel- und Bypassschieber sowie eventuell Dralldrosseln mit ihren bewegten und daher störanfälligen Organen.

Patentansprüche

1. Turboverdichter mit fliegender Anordnung der Verdichterräder (7, 8) und Direktantrieb durch einen Elektromotor (1), welcher vom Arbeitsmittel des Verdichters gekühlt ist, dadurch gekennzeichnet, dass die Welle (11) des Elektromotors (1) und der Verdichterräder (7, 8) magnetisch oder gasdynamisch oder hydrostatisch berührungslos gelagert ist, und dass für die Regelung der Drehzahl des Elektromotors (1) ein thyristor- oder transistorgesteuerter Zwischenkreisumrichter (37) für eine variable Ausgangsfrequenz und -spannung vorgesehen ist.

2. Turboverdichter nach Anspruch 1, dadurch gekennzeichnet, dass die magnetisch berührungslose Lagerung mittels Magnetlager (12, 13, 14) ausgeführt ist.

3. Turboverdichter nach Anspruch 1, dadurch gekennzeichnet, dass die gasdynamisch berührungslose Lagerung mittels gasdynamischer Gleitlager ausgeführt ist.

4. Turboverdichter nach Anspruch 1, dadurch gekennzeichnet, dass die hydrostatisch berührungslose Lagerung mittels hydrostatischer Gaslager ausgeführt ist.

5. Turboverdichter nach Anspruch 1 und 2, dadurch gekennzeichnet, dass die Magnetlager (12, 13, 14) aus Elektromagneten aufgebaut sind.

6. Turboverdichter nach Anspruch 1 und 2, dadurch gekennzeichnet, dass die Magnetlager (12, 13, 14) wenigstens teilweise aus Permanentmagneten bestehen, wobei die Elektromagnete im Statorteil der Magnetlager (12, 13, 14) mit regelbarer Magnetkraft versehen ist.

7. Turboverdichter nach einem der Ansprüche 1 bis 5 ohne Anspruch 3 und 4, dadurch gekennzeichnet, dass die Magnetlager (10, 11, 20) sowohl radiale (10, 11) als auch axiale Magnetlager (20) sind.

8. Turboverdichter nach Anspruch 1 und 3, dadurch gekennzeichnet, dass die gasdynamischen Gleitlager sowohl radiale als auch axiale Gleitlager sind.

9. Turboverdichter nach Anspruch 1 und 4, dadurch gekennzeichnet, dass die hydrostatischen Gaslager sowohl radiale als auch axiale Gaslager sind.

10. Turboverdichter nach einem der Ansprüche 1 bis 9, dadurch gekennzeichnet, dass die Baueinheit, im wesentlichen bestehend aus Verdichter (7, 8, 9, 10) und Elektromotor (1) druckdicht und mit Flanschen für den Einbau in eine Rohrleitung versehen ist.

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 644 380 (SOC. EUROPEENE DE PROPULSION) * Seite 9, Zeilen 10-17, Zeilen 27-29; Seite 14, Zeilen 12-15; Abbildung 1 * | 1,2,5-7 | F 04 D 29/04 F 04 D 27/02 F 16 C 39/06 F 16 C |
| A | DE-A-2 515 608 (BBC) * Seite 4, Zeilen 14-23; Abbildung 1 * | 1,2,5-7 | |
| A | FR-A-1 113 372 (SULZER) * Seite 1, linke Spalte, Zeilen 11-25; Abbildung 2 * | 1,4,9 | |
| A | FR-A-1 220 926 (ARMSTRONG-SIDDELEY) * Seite 1, linke Spalte, Zeilen 1-24; Abbildung 1 * | 1,3,8 | RECHERCHIERTE SACHGEBIETE (Int. Cl. ³) |
| A | US-A-4 177 649 (VENEMA) * Spalte 2, Zeilen 63-68; Spalte 3, Zeilen 1-23 * | 1 | F 04 D F 16 C H 02 K |

Der vorliegende Recherchenbericht wurde für alle Patentansprüche erstellt.

| Recherchenort DEN HAAG | Abschlußdatum der Recherche 10-05-1983 | Prüfer WOOD R.S. |
|---|---|---|